# EUROPEAN PATENT SPECIFICATION

(11) **EP 4 045 781 B1**
(45) Date of publication and mention of the grant of the patent: **02.08.2023**
(21) Application number: 20799825.3
(22) Date of filing: 09.10.2020
(51) Int. Cl.: F01P 7/16, F16K 11/085

(54) **FLUIDIC COMMAND DEVICE OF A VEHICLE**
FLUIDISCHE STEUERVORRICHTUNG FÜR EIN FAHRZEUG
DISPOSITIF DE COMMANDE FLUIDIQUE D'UN VÉHICULE

(30) Priority: 14.10.2019 IT 201900018704
(43) Date of publication of application: 24.08.2022
(73) Proprietor: Industrie Saleri Italo S.P.A., 25065 Lumezzane, Brescia (IT)
(72) Inventor: SURACE, Alfonso, 25065 Lumezzane, Brescia (IT); PEDERSOLI, Marco, 25065 Lumezzane, Brescia (IT); CORNACCHIA, Simone, 25065 Lumezzane, Brescia (IT)
(74) Representative: Gamba, Alessandro
(86) International application number: PCT/IB2020/059506
(87) International publication number: WO 2021/074755

(56) References cited:
- GB-A- 2 383 840
- US-A- 4 553 566
- US-A- 5 251 588
- US-A1- 2005 000 473
- US-A1- 2015 101 789

## Description

The present invention relates to a fluidic command device of a thermal management assembly of a thermal regulation system of a vehicle. Furthermore, the present invention also relates to a thermal management assembly that comprises said fluidic command device. Additionally, the present invention relates to the thermal regulation system of a vehicle, which comprises said thermal management assembly. Furthermore, the present invention also relates to a vehicle, which comprises said system and comprises said thermal management assembly.

In other words, the present invention relates to the automotive field and in detail to the thermal regulation system of a vehicle. In particular, the term "vehicle" relates to any means of transport without any limitation as to type or size, i.e. a motor vehicle or a semi-articulated vehicle.

The need to manage the temperature of the operating groups of the vehicle to take them to and/or keep them in the best possible operating conditions (by cooling and/or heating them) is known from the prior art. In particular, hereinafter, "operating group" means a specific component or group of components for carrying out a given operation required for the motion of the vehicle. Therefore, for example, operating group means the endothermic engine group, or the battery group, or the gearbox group, or the transmission group, or the electric motor group, or the battery group. In particular, in the present discussion, as described in detail below, in some embodiments, an "operating group" comprises one or more components or groups of components also comprised in other distinct "operating groups".

In recent years, hybrid-powered vehicle solutions have proliferated, in which a plurality of operating groups, such as the endothermic engine group, the battery group, and the electric motor group connected to said battery group, are necessarily present, each operating group having different needs. Indeed, each of said operating groups has a mutually different operating behavior; while both the vehicle is in motion and when it is stationary (e.g. the electric motor operates in situations with the endothermic engine in standby). Therefore, it is apparent that each operating group has different needs for thermal management, cooling and/or heating, as a function of the different operating situations of the vehicle and as a function of its physical features.

Vehicle solutions are thus known which comprise a specific thermal regulation system for each operating group, in which a specific amount of working fluid circulates. In such embodiments, each specific thermal regulation system is designed independently, requiring specific components (e.g. specific pump groups). GB2 383 840 shows an arrangement for the cooling system of a hybrid vehicle.

In this context, the problem of having, managing, providing, and producing a plurality of thermal regulation systems in the same vehicle is thus apparent.

Therefore, the main problem present in this field is that of having, accommodating, and managing a multitude of components required for the thermal management of each operating group comprised in the same vehicle.

Given the above, the need to solve the aforesaid technical problems is strongly felt.

It is thus the object of the present invention to provide a new fluidic command device by means of which such a need is met.

Such an object is achieved by a fluidic command device as claimed in claim 1. Furthermore, such an object is achieved by a thermal management assembly as claimed in claim 12. Similarly, such an object is achieved by a thermal regulation system of a vehicle, which comprises such a thermal management assembly, as claimed in claim 13. Furthermore, such an object is achieved by a vehicle, which comprises the thermal regulation system according to claim 14.

The claims dependent on these show preferred variants implying further advantageous aspects.

Further features and advantages of the invention will become apparent from the description provided below of preferred exemplary embodiments thereof, given by way of non-limiting example, with reference to the accompanying drawings, in which:

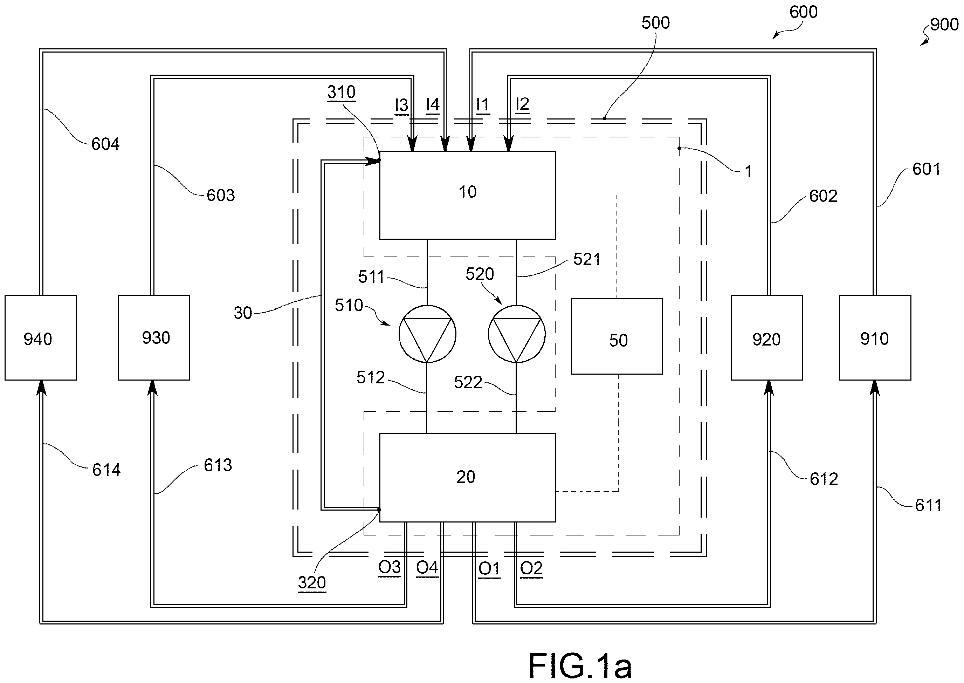

- figure 1a is a diagrammatic view of a vehicle according to a preferred embodiment of the present invention;

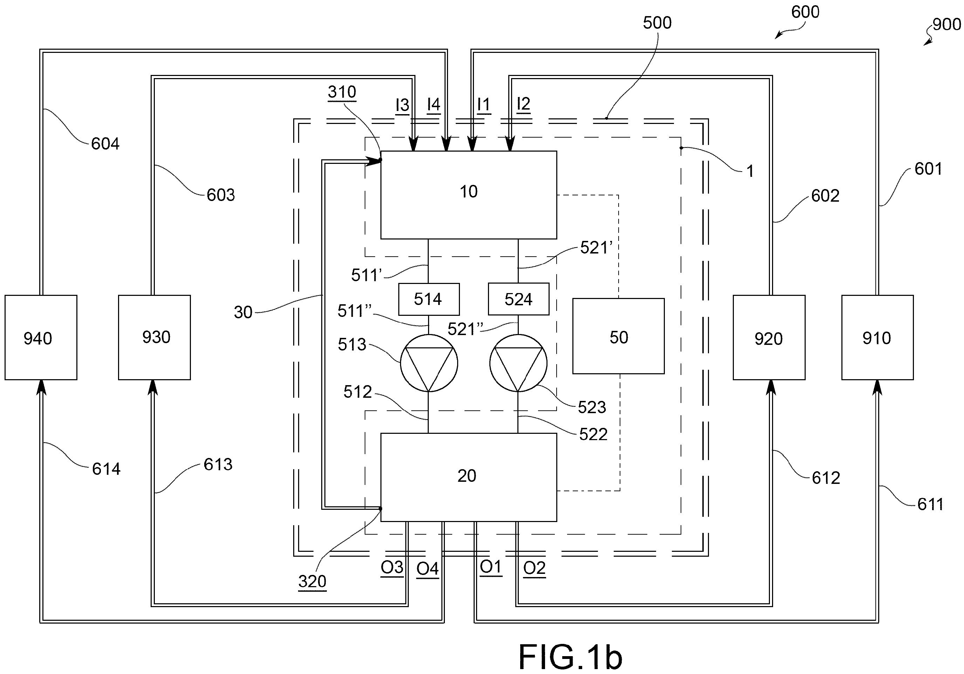

- figure 1b is a diagrammatic view of a vehicle according to a preferred embodiment of the present invention;
- figure 2a is a diagrammatic view of a thermal regulation system according to a first working configuration;

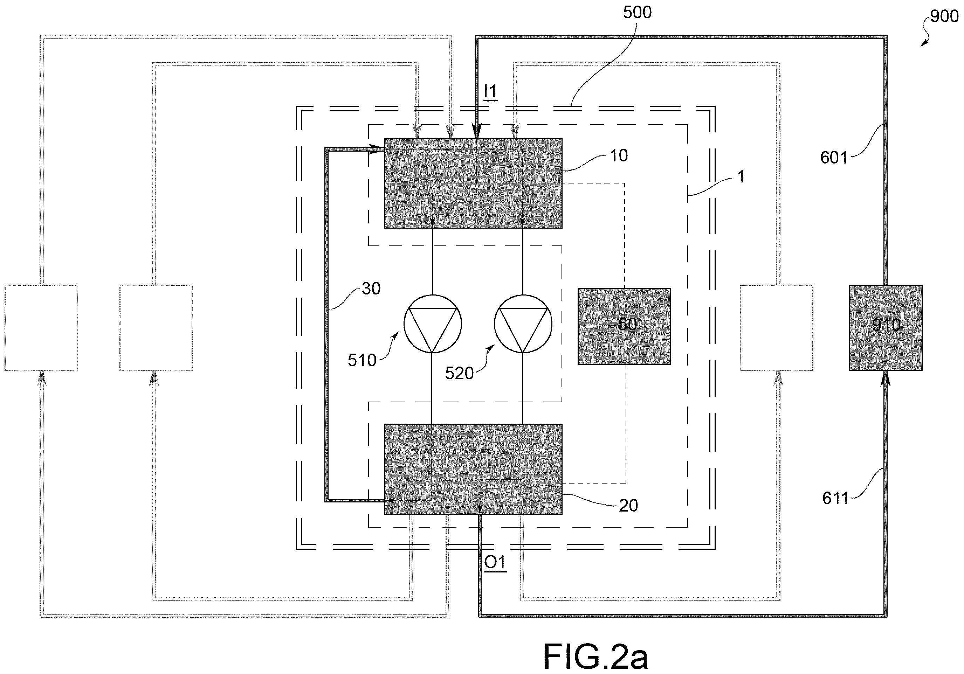

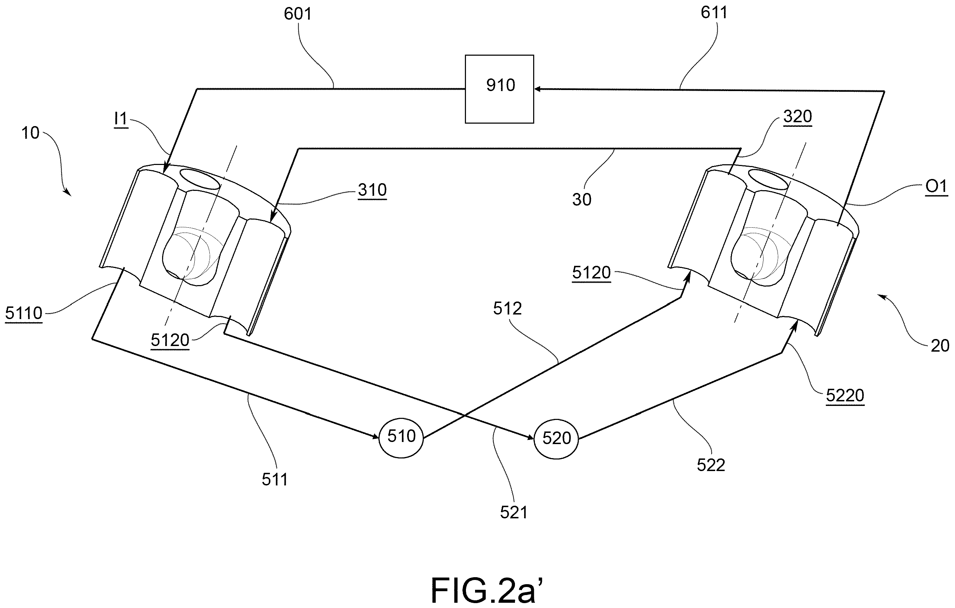

- figure 2a' is a further diagrammatic view of the thermal regulation system in figure 2a;

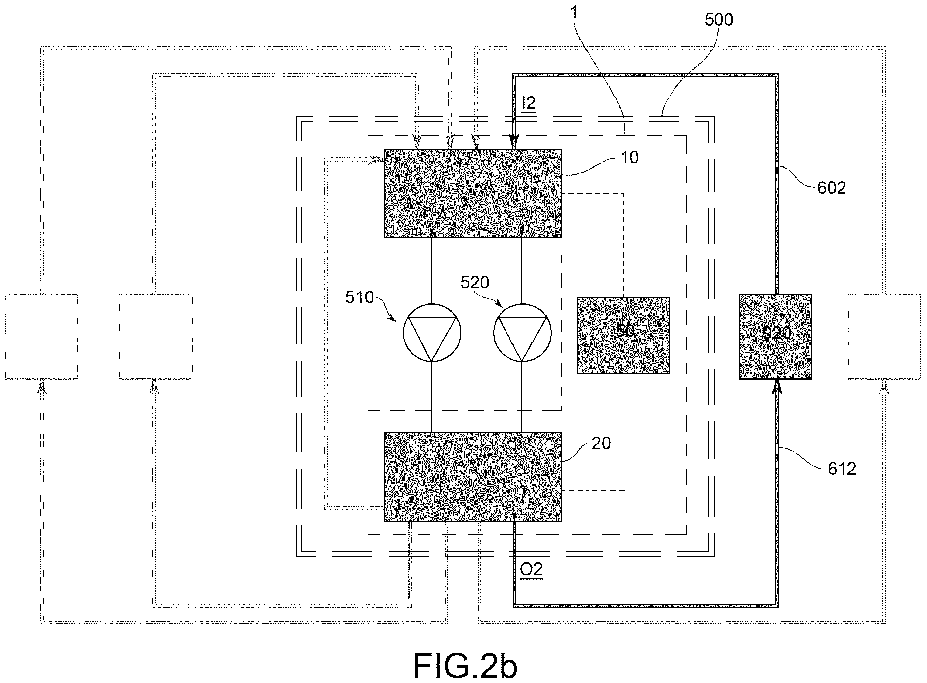

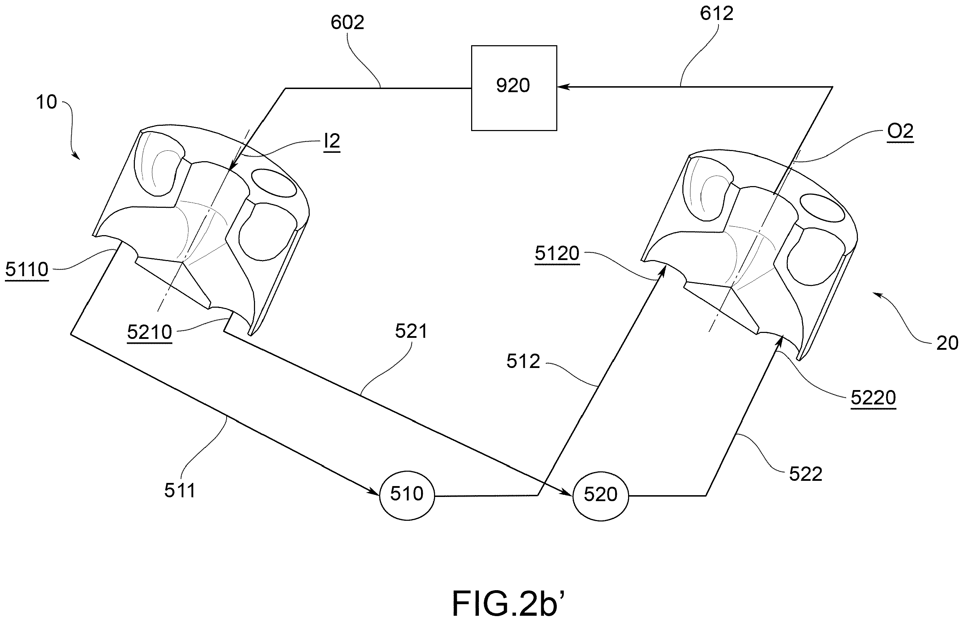

- figure 2b is a diagrammatic view of a thermal regulation system according to a second working configuration;
- figure 2b' is a further diagrammatic view of the thermal regulation system in figure 2b;

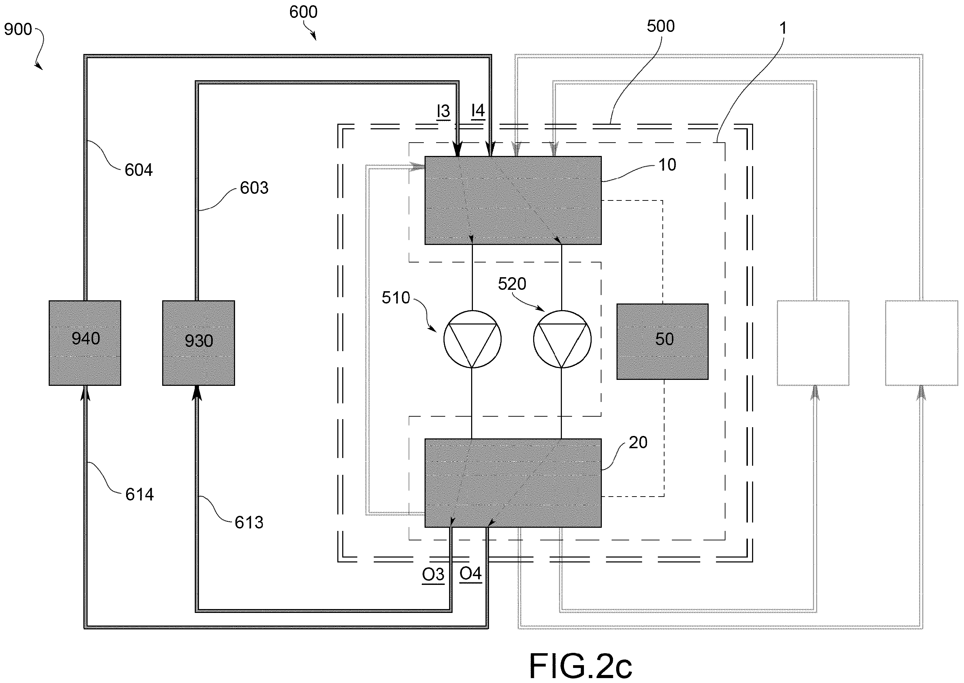

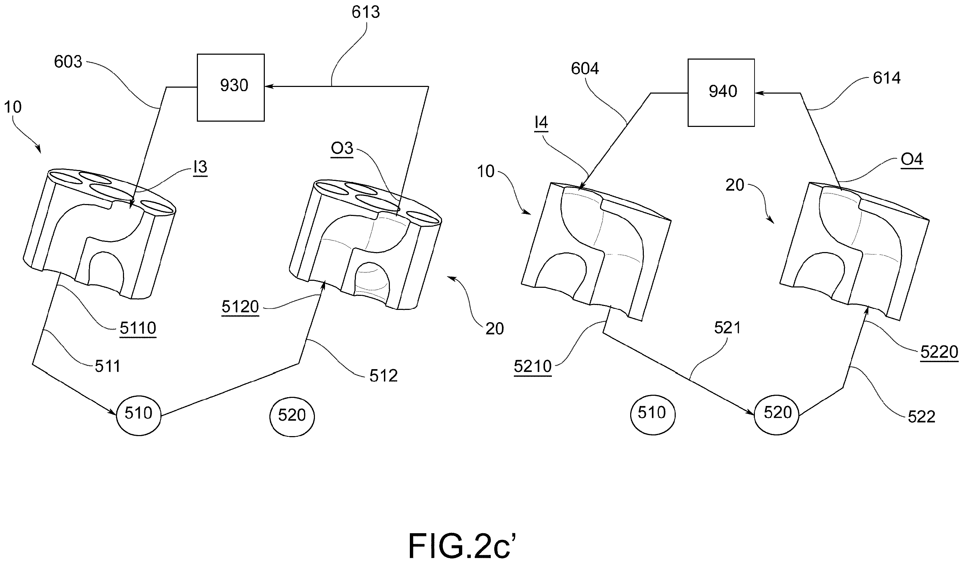

- figure 2c is a diagrammatic view of a thermal regulation system according to a third working configuration;
- figure 2c' is a further diagrammatic view of the thermal regulation system in figure 2c;

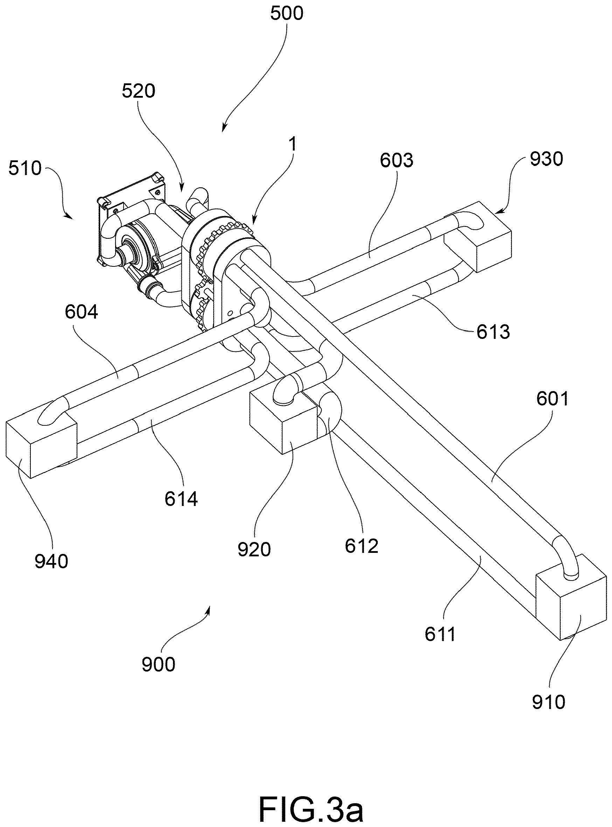

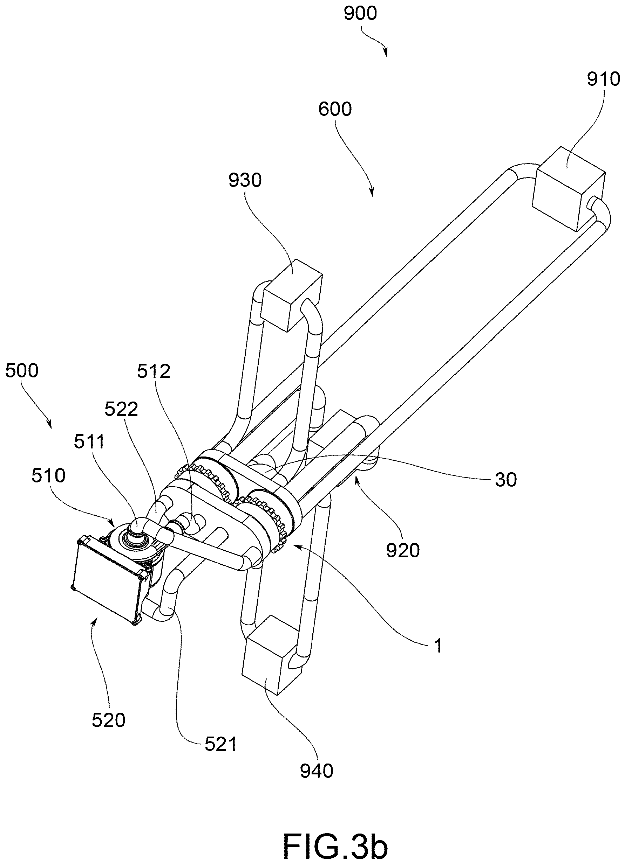

- figures 3a and 3b are two diagrammatic, perspective views of the thermal regulation system of the present invention;

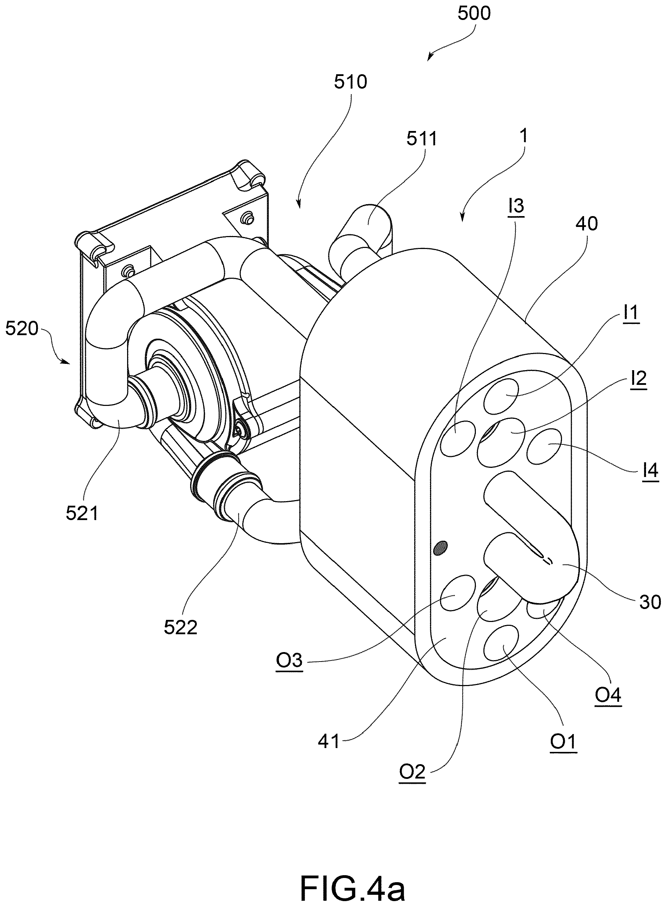

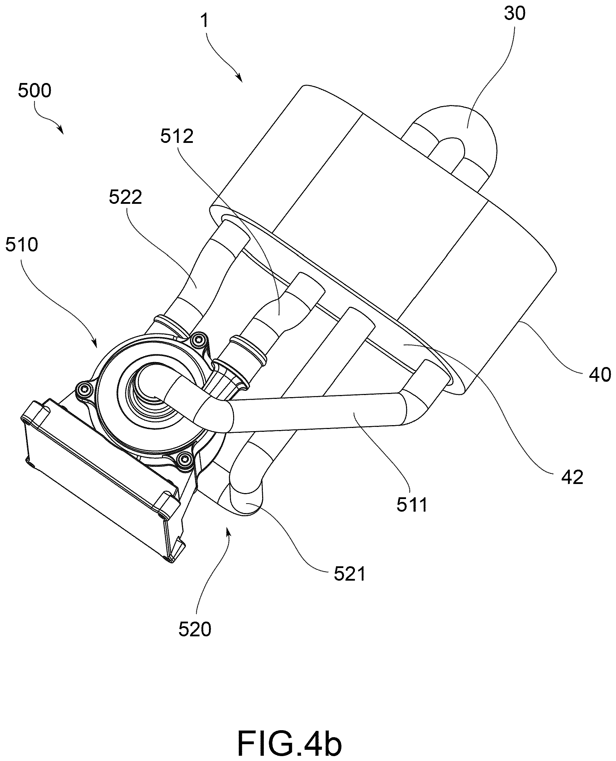

- figures 4a and 4b are two perspective views of the thermal management assembly of the present invention according to a preferred embodiment;

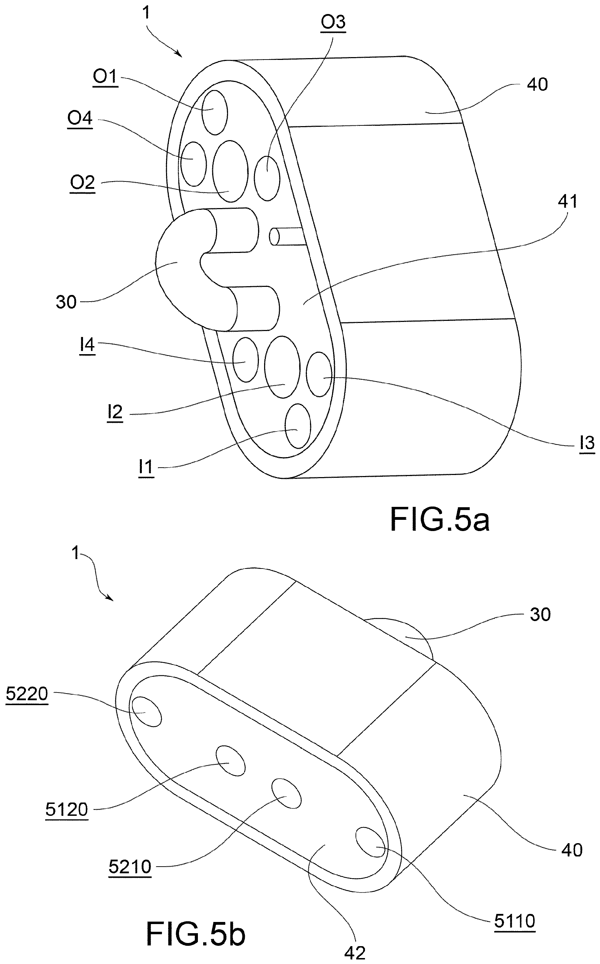

- figures 5a and 5b are two perspective views of the fluidic command device comprised in the thermal management assembly shown in the figures above;

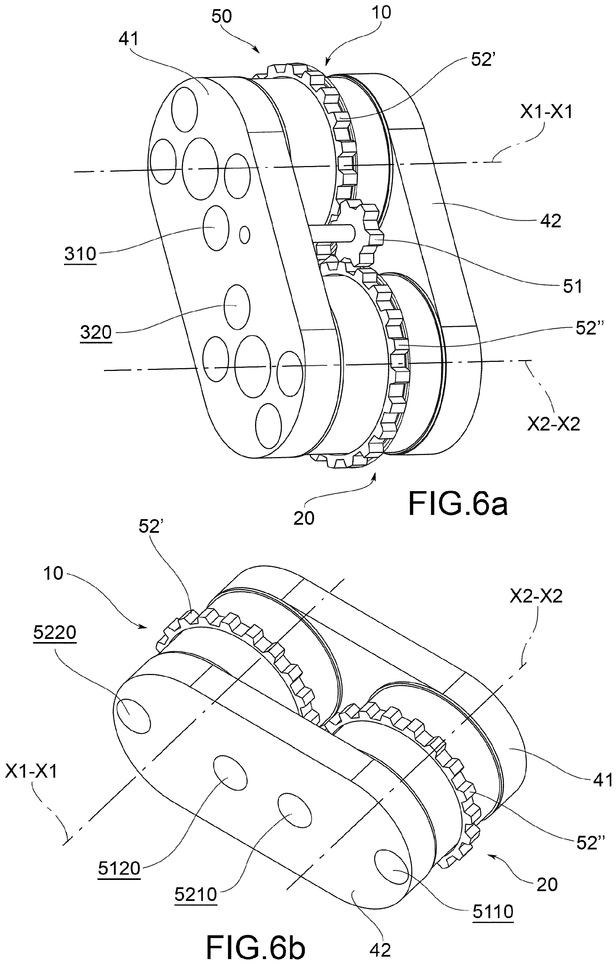

- figures 6a and 6b are two perspective views of some components comprised in the fluidic command device shown in figures 5a and 5b.

With reference to the accompanying figures, reference numeral 500 indicates as a whole a thermal management assembly of a thermal regulation system 600 of a vehicle 900 (diagrammatically shown in the figures), according to the present invention.

The present invention also relates to the thermal regulation system 600 that comprises the thermal management assembly 500.

The present invention also relates to the vehicle 900 that comprises the thermal regulation system 600. Preferably, said vehicle 900 is hybrid-powered, i.e. is powered in combination by an endothermic engine group and at least one electric motor group electrically supplied by a respective battery group. In particular, in the present invention, the vehicle 900 comprises an endothermic engine group with power supply and two electric motor groups powered by two battery groups, respectively.

Preferably, according to the present invention, the vehicle 900 comprises a first operating group 910, a second operating group 920, a third operating group 930, and a fourth operating group 940.

Each operating group corresponds to a "load". In particular, each operating group corresponds to a respective component or group of components comprised in the vehicle and preferably belonging to the power supply of the vehicle.

Preferably, the first operating group 910 is an endothermic engine group.

Preferably, the second operating group 920 comprises a first battery group and a second battery group.

Preferably, the third operating group 930 comprises the first battery group and a first electric motor group.

Preferably, the fourth operating group 940 comprises the second battery group and a second electric motor group.

According to the present invention, the first operating group 910, the second operating group 920, the third operating group 930, and the fourth operating group 940 are fluidically connected to the thermal regulation system 600.

Preferably, the first operating group 910, the second operating group 920, the third operating group 930, and the fourth operating group 940 are fluidically connected by means of a plurality of system ducts 601, 602, 603, 604, 611, 612, 613, 614 comprised in the thermal regulation system 600. Preferably, the thermal regulation system 600 further comprises specific heat exchanger groups (not shown).

According to a preferred embodiment, as shown in the accompanying figures, the thermal regulation system 600 comprises at least one system inlet duct and at least one system outlet duct in fluid connection with each operating group.

According to the present invention, the thermal management assembly 500 comprises a first pump group 510 suitable to command the motion of the working fluid comprising a first inlet duct 511 and a first outlet duct 512.

Furthermore, according to the present invention, the thermal management assembly 500 comprises a second pump group 520 suitable, in turn, to command the motion of the working fluid comprising a second inlet duct 521 and a second outlet duct 522.

According to a preferred embodiment, the first pump group 510 comprises a first command unit 513 comprising a first impeller, which intercepts the working fluid flowing in the first inlet duct 511 to send it into the first outlet duct 512. Preferably, said first impeller is of the radial type, aspirating working fluid axially through the first inlet duct 511 to push it out tangentially towards the first outlet duct 512.

According to a preferred embodiment, the first pump group 510 further comprises a first stabilization tank 514, which divides the first inlet duct 511 into a first duct upstream section 511' and a first duct downstream section 511". In particular, said first stabilization tank 514 unifies the pressure of the flowing liquid before it reaches the first impeller comprised in the first command unit 513. In other words, the working fluid reaches the first command unit 513 after having flowed in the first stabilization tank 514.

According to a preferred embodiment, the second pump group 520 comprises a second command group 523 comprising a second impeller, which intercepts the working fluid flowing in the second inlet duct 521 to send it into the second outlet duct 522. Preferably, said second impeller is of the radial type, aspirating working fluid axially through the second inlet duct 521 to push it out tangentially towards the second outlet duct 522.

According to a preferred embodiment, the second pump group 520 further comprises a second stabilization tank 524, which divides the second inlet duct 521 into a second duct upstream section 521' and a second duct downstream section 521". In particular, said second stabilization tank 524 unifies the pressure of the flowing liquid before it reaches the second impeller comprised in the second command unit 523. In other words, the working fluid reaches the second command unit 523 after having flowed in the second stabilization tank 524.

According to a preferred embodiment, the thermal management assembly 500 further comprises a fluidic command device 1 suitable to manage the amounts of working fluid flowing in the thermal management assembly 500.

In particular, the fluidic command device 1 is fluidically connected to the first pair of ducts 511, 512 and to the second pair of ducts 521, 522. Thereby, the fluidic command device 1 is suitable for managing through which of these ducts the working fluid flows.

Furthermore, the fluidic command device 1 is fluidically connectable by means of system ducts to the respective operating groups.

Indeed, the fluidic command device 1 comprises four inlet ports I1, I2, I3, I4, each one being fluidically connectable to a respective operating group 910, 920, 930, 940 to allow the working fluid to enter into the fluidic command device 1. In other words, through the four inlet ports I1, I2, I3, I4, the fluidic command device 1 receives working fluid from the respective operating groups 910, 920, 930, 940.

Furthermore, the fluidic command device 1 comprises four outlet ports O1, O2, O3, O4, each one being fluidically connectable to a respective operating group 910, 920, 930, 940 to allow the working fluid to exit from the fluidic command device 1. In other words, through the four outlet ports O1, O2, O3, O4, the fluidic command device 1 releases working fluid to the respective operating groups 910, 920, 930, 940.

Furthermore, the fluidic command device 1 comprises an auxiliary duct 30, which fluidically connects the first pump group 510 and the second pump group 520. Preferably, the auxiliary duct 30 is a bypass duct, which directly connects the first pump group 510 and the second pump group 520. In other words, the auxiliary duct 30 connects the first pump group 510 directly to the second pump group 520 so that no operating group is fluidically present between the two pump groups.

According to the present invention, the fluidic command device 1 is configurable in a first working configuration, in which the working fluid flows into the first inlet port I1 and flows out from the first outlet port O1, thus preventing the flow through the other inlet ports and the other outlet ports; in said first configuration, the working fluid flows between the first inlet port I1 and the first outlet port O1 into the first pump group 510, the auxiliary duct 30 and the second pump group 520.

Preferably, the first working configuration is diagrammatically shown by way of example in figures 2a and 2a' .

In other words, in the first working configuration, the fluidic command device 1 is configured to identify a single fluid circuit in which the temperature of the first operating group 910 is managed. In yet other words, in the first working configuration, the fluidic command device 1 is configured to manage the temperature of the first operating group 910 using the first pump group 510 and the second pump group 520 in series.

Furthermore, according to the present invention, the fluidic command device 1 is configurable in a second working configuration, in which the working fluid flows into the second inlet port I2 and flows out from the second outlet port O2, thus preventing the flow through the other inlet ports and the other outlet ports; in which, between the second inlet port I2 and the second outlet port O2, the working fluid flows both in the first pump group 510 and in the second pump group 520, thus preventing the flow in the auxiliary duct 30.

Preferably, the second working configuration is diagrammatically shown by way of example in figures 2b and 2b'.

In other words, in the second working configuration, the fluidic command device 1 is configured to identify a single fluid circuit in which the temperature of the second operating group 920 is managed. In yet other words, in the second working configuration, the fluidic command device 1 is configured to manage the temperature of the second operating group 920 using the first pump group 510 and the second pump group 520 in parallel.

Furthermore, according to the present invention, the fluidic command device 1 is configurable in a third working configuration, in which the working fluid flows into the third inlet port I3 and flows out from the third outlet port O3, in which between the third inlet port I3 and the third outlet port O3, the working fluid flows into the first pump group 510, and in which the working fluid flows into the fourth inlet port I4 and flows out from the fourth outlet port O4, in which between the fourth inlet port I4 and the fourth outlet port O4, the working fluid flows into the second pump group 520.

Preferably, the third working configuration is diagrammatically shown by way of example in figures 2c and 2c'.

In other words, in the third working configuration, the fluidic command device 1 is configured to identify two distinct fluidic circuits, in which the temperature of the third operating group 930 and of the fourth operating group 940 is managed. In other words, in the third working configuration, the fluidic command device 1 is configured to manage the temperature of the third operating group 930 using one of the two pump groups, e.g. the first pump group 510, and to manage the temperature of the fourth operating group 940 using the remaining pump group, e.g. the second pump group 520.

According to a preferred embodiment, the fluidic command device 1 comprises a first command valve element 10 and a second command valve element 20. According to the above, each working configuration corresponds to the regulation of each command valve element 10, 20 to a predetermined position.

According to a preferred embodiment, the first command valve element 10 is fluidically connected on one side to the four inlet ports I1, I2, I3, I4 and to the first end of the auxiliary duct 31 and on the other side to the first inlet duct 511 and to the second inlet duct 521. In other words, the first command valve element 10 is fluidically connected on one side to the operating groups and on the other side to the first pump group 510 and the second pump group 520. In yet other words, the first command valve element 10 is suitable for receiving working fluid from the operating groups to direct it towards the first pump group 510 and/or the second pump group 520.

According to a preferred embodiment, the second command valve element 20 is fluidically connected on one side to the first outlet duct 512 and second outlet duct 522 and on the other side to a second end of the auxiliary duct 32 and the four outlet ports O1, O2, O3, O4. In other words, the second command valve element 20 is fluidically connected on one side to the first pump group 510 and to the second pump group 520 and on the other side to the operating groups. In yet other words, the second command valve element 20 is suitable for receiving working fluid from the first pump group 510 and/or the second pump group 520 to direct it towards the operating groups.

According to a preferred embodiment, both the first command valve element 10 and the second command valve element 20 comprise therein a plurality of command sections, the positioning of which is such as to direct the flow of the working fluid from one side to the other of the respective command valve element.

According to a preferred embodiment, the first command valve element 10 extends along a first axis X1-X1. The aforesaid different working configurations correspond to different angular positions of the first command valve element 10 with respect to the first axis X1-X1.

According to a preferred embodiment, the second command valve element 20 extends along a second axis X2-X2. The aforesaid different working configurations correspond to different angular positions of the second command valve element 20 with respect to the second axis X2-X2.

According to a preferred embodiment, the first axis X1-X1 and the second axis X2-X2 extend parallel to each other.

Preferably, the first command valve element 10 and the second command valve element 20 are angularly positionable independently of each other.

Preferably, the first command valve element 10 and the second command valve element 20 are angularly positionable at an angle simultaneously with each other.

According to a preferred embodiment, the fluidic command device 1 comprises command means 50 operatively connected to the first command valve element 10 and the second command valve element 20 suitable to command them to a preferred angular position.

According to a preferred embodiment, said command means 50 comprise an active member 51, a first passive member 52' engaged with the active member 51 and the first valve command element 10, and a second passive member 52" engaged with the active member 51 and the second valve command element 20.

Preferably, the action of the active member 51 corresponds to a rotation of the first passive member 52' and, therefore, of the first command valve element 10, and to a rotation of the second passive member 52" and, therefore, of the second command valve element 20.

According to a preferred embodiment, the active member 51 comprises a gear and the first passive member 52' and the second passive member 52" comprise further gears, respectively, meshing with the active member 51.

Preferably, the first passive member 52' and the second passive member 52" extend about the first axis X1-X1 and the second axis X2-X2, respectively.

According to a preferred embodiment, the active member 51 is positioned between the first command valve element 10 and the second command valve element 20.

According to a preferred embodiment, the active member 51 and the passive members 52', 52" are directly engaged with each other.

In further variants, the active member 51 and the passive members 52', 52" are indirectly engaged with each other, e.g. by means of additional motion transmission components, such as other gears or belt elements.

According to a preferred embodiment, the fluidic command device 1 comprising a device body 40 suitable to contain the first command valve element 10 and the second command valve element 20.

Preferably, the device body 40 comprises a first connecting flange 41 and a second connecting flange 42. According to a preferred embodiment, the first command valve element 10 and the second command valve element 20 are mounted between the first connecting flange 41 and the second connecting flange 42.

According to a preferred embodiment, the first connecting flange 41 comprises the four inlet ports I1, I2, I3, I4, and the four outlet ports O1, O2, O3, O4.

Furthermore, according to a preferred embodiment, the first connecting flange 41 further comprises the first auxiliary port 310, which is connectable to the first end of the auxiliary duct 31, and the second auxiliary port 320, which is connectable to the second end of the auxiliary duct 32.

According to a preferred embodiment, the second connecting flange 42 comprises two pairs of ports for the connection with the first pump group 510 and the second pump group 520, respectively.

In particular, the first pair of connection ports 5110, 5210 are suitable for connecting fluidically the first inlet duct 511 and the second inlet duct 521.

Said first pair of connection ports 5110, 5210 is fluidically connected to the first command valve element 10.

In particular, the second pair of connection ports 5120, 5220 is suitable for putting the first inlet duct 512 and the second inlet duct 522 into fluid communication.

Said second pair of connection ports 5120, 5220 is fluidically connected to the second command valve element 20.

As shown by way of example in the accompanying figures, the first command valve element 10 and the second command valve element 20 comprise said command sections, the development of which is such as to direct the flow of working fluid between one connecting flange and the other, and, therefore, between the various components fluidically connected to said flanges. As can be seen in the accompanying figures, some command sections are suitable for joining two inlet flows into a single outlet flow, or vice versa. Or, as can be seen in the accompanying figures, some command sections are suitable for connecting a respective inlet with a respective outlet.

Preferably, as shown by way of example, the fluidic command device 1 is highly compact in size so that it is suitable for being accommodated in the engine compartment of a vehicle.

Preferably, the two pump groups have the features described in document 102018000010971 to the Applicant, as also shown as an example in the accompanying figures.

Additionally, as mentioned, the present invention further relates to the thermal regulation system 600 of a vehicle, which comprises said thermal management assembly 500 having the features described above. Said vehicle comprises a first operating group 910, a second operating group 920, a third operating group 930, and a fourth operating group 940, while the thermal regulation system 600 comprises a plurality of system ducts 601, 602, 603, 604, 611, 612, 613, 614 suitable to be fluidically connected the first operating group 910, the second operating group 920, the third operating group 930 and with the fourth operating group 940. Furthermore, said system ducts 601, 602, 603, 604, 611, 612, 613, 614 are suitable for being fluidically connected to the described thermal management assembly 500.

The present invention also relates to a vehicle 900, which comprises a first operating group 910, e.g. an endothermic engine group, a second operating group 920, e.g. a first battery group and a second battery group, a third operating group 930, e.g. comprising the first battery group and a first electric motor group, a fourth operating group 940, e.g. comprising the second battery group and a second electric motor group. Furthermore, the vehicle 900 of the present invention further comprises a thermal regulation system 600.

Preferably, said vehicle 900 is hybrid-powered, in which the first operating group 910 is an endothermic engine group, the second operating group 920 is a first battery group and a second battery group, the third operating group 930 is the first battery group and a first electric motor group, the fourth operating group 940 is the second battery group and a second electric motor group.

For example, an embodiment of the vehicle 900 of this type is a vehicle with an endothermic engine group, and which has, for example on an electrically driven axle, an electric power group (with respective battery group) for each wheel group.

Innovatively, the thermal management assembly, the thermal regulation system of a vehicle, which comprises such a management assembly and the vehicle which comprises the thermal regulation system largely fulfill the purpose of the present invention by solving the problems which emerged in typical solutions of the prior art.

Indeed, advantageously, the fluidic command device of the present invention allows the regulation of a plurality of operating groups of the vehicle.

Advantageously, the fluidic command device of the present invention allows simple management of the temperature of different operating groups of the vehicle, using only two pump groups.

Advantageously, the fluidic command device is of simple positioning in the vehicle, having compact dimensions and, therefore, compact overall dimensions.

Advantageously, the fluidic command device is cost-effective to manufacture.

Advantageously, the fluidic command device of the present invention manages the temperature of the vehicle in a highly effective and flexible manner.

Advantageously, the fluidic command device of the present invention manages the temperature of the vehicle in a plurality of different operating conditions, i.e. both in motion and stationary.

Advantageously, the fluidic command device is suitable, in the first working configuration, for managing the temperature of the endothermic engine group. In other words, in moving vehicle conditions at high rpm and/or high speeds, at which the vehicle is powered endothermically, the thermal management assembly exclusively manages the temperature of said "endothermic drive part".

Advantageously, the fluidic command device is suitable, in the first configuration, for managing the temperature of an operating group such as the endothermic engine group by virtue of a double working fluid flow.

Advantageously, the fluidic command device is suitable, in the second configuration, for managing the temperature of two electric motor groups and respective battery groups. In other words, in moving vehicle conditions at low rpm and/or low speeds, at which the vehicle is electrically powered, the thermal management assembly exclusively manages the temperature of said "electric drive part".

Advantageously, the fluidic command device is suitable, in the second configuration, to manage the temperature of an operating group with high load losses, such as the battery group, the battery groups, by virtue of a double head. Advantageously, in such a configuration, the temperature of the battery groups is managed separately from the temperature of the respective electric motor groups and, obviously, of the endothermic engine group; for example, this configuration applies in situations in which the vehicle is stationary, e.g. when recharging the battery group, or when starting the vehicle and starting the battery group.

Advantageously, the management of flows in ducts and circuits is highly simplified.

Advantageously, with simple rotational operations, the fluid management device is suitable for switching from one configuration to another. Advantageously, with a single rotational operation, the fluid management device is configurable in the desired working configuration.

In order to meet contingent needs, it is apparent that those skilled in the art can make changes to the fluidic command device, the thermal management assembly, and the thermal regulation system, as well as to the vehicle, all of which are contained within the scope of protection as defined by the following claims.

## Claims

1. A fluidic command device (1) of a thermal management assembly (500) of a thermal regulation system (600) of a vehicle (900), wherein said vehicle (900) comprises four operating groups (910, 920, 930, 940), wherein the thermal management assembly (500) comprises:
i) a first pump group (510) suitable to command the movement of the working fluid in the thermal management assembly (500) comprising a first inlet duct (511) and a first outlet duct (512);
ii) a second pump group (520) suitable, in turn, to command the movement of the working fluid in the thermal management assembly (500), comprising a second inlet duct (521) and a second outlet duct (522);
wherein the fluidic command device (1) is **characterized in that** it comprises a first pair of ports (5110, 5210) and a second pair of ports (5120, 5220) fluidically connectable with the first pair of ducts (511, 512) and with the second pair of ducts (521, 522) and includes:
- four inlet ports (I1, I2, I3, I4) each being fluidically connectable to a respective operating group (910, 920, 930, 940) to allow the working fluid to enter the fluidic command device (1);
- four outlet ports (O1, O2, O3, O4) each fluidically connectable to a respective operating group (910, 920, 930, 940) to allow the working fluid to exit from the fluidic command device (1);
- an auxiliary duct (30), which fluidically connects the first pump group (510) and the second pump group (520);
wherein the fluidic command device (1) is configurable in:
l) a first working configuration, in which the working fluid flows into the first inlet port (I1) and flows out from the first outlet port (O1), thus preventing the flow through the other inlet and other outlet ports, wherein between the first inlet port (I1) and the first outlet port (O1), the working fluid flows into the first pump group (510), the auxiliary duct (30) and the second pump group (520);
m) a second working configuration, in which the working fluid flows into the second inlet port (I2) and flows out from the second outlet port (O2), thus preventing the flow through the other inlet ports and the other outlet ports, wherein between the second inlet port (I2) and the second outlet port (O2), the working fluid flows into both the first pump group (510) and the second pump group (520), preventing the flow into the auxiliary duct (30);
n) a third working configuration, in which the working fluid flows into the third inlet port (I3) and flows out from the third outlet port (O3), wherein between the third inlet port (I3) and third outlet port (O3), the working fluid flows into the first pump group (510) and wherein the working fluid flows into the fourth inlet port (I4) and flows out from the fourth outlet port (O4), wherein between the fourth inlet port (I4) and fourth outlet port (O4), the working fluid flows into the second pump group (520).

2. A fluidic command device (1) according to claim 1, wherein the fluidic command device (1) comprises:
- a first command valve element (10) fluidically connected on one side to the four inlet ports (I1, I2, I3, I4) and to a first end of the auxiliary duct (31) and on the other side to the first inlet duct (511) and to the second inlet duct (521);
- a second command valve element (20) fluidically connected on one side to the first outlet duct (512) and to the second outlet duct (522) and on the other side to a second end of the auxiliary duct (32) and to the four outlet ports (O1, O2, O3, O4).

3. A fluidic command device (1) according to claim 2, wherein both the first command valve element (10) and the second command valve element (20) comprise a plurality of command sections therein, the positioning of which is such as to direct the flow of the working fluid from one side to the other of the respective command valve element.

4. A fluidic command device (1) according to claim 2 or claim 3, wherein the first command valve element (10) extends along a first axis (X1-X1) and the second command valve element (20) extends along a second axis (X2-X2), wherein the different working configurations correspond to different angular positions of the first valve command element (10) with respect to the first axis (X1-X1) and of the second command valve element (20) with respect to the second axis (X2-X2).

5. A fluidic command device (1) according to claim 4, wherein the fluidic command device (1) comprises command means (50) operatively connected to the first command valve element (10) and to the second command valve element (20) suitable to command them in a preferred angular position.

6. A fluidic command device (1) according to claim 5, wherein said command means (50) comprise an active member (51), a first passive member (52') engaged with the active member (51) and with the first command valve element (10), and a second passive member (52") engaged with the active member (51) and with the second command valve element (20), so that the action of the active member (51) corresponds to a rotation of the first passive member (52') and therefore of the first command valve element (10), and to a rotation of the second passive member (52") and therefore of the second command valve element (20).

7. A fluidic command device (1) according to claim 6, wherein the active member (51) comprises a gear, and the first passive member (52') and the second passive member (52") comprise further gears, respectively, meshing the active member (51), extending about the first axis (X1-X1) and the second axis (X2-X2), respectively.

8. A fluidic command device (1) according to any one of the preceding claims in combination with claim 3, wherein the fluidic command device (1) comprises a device body (40) suitable to contain the first command valve element (10) and the second command valve element (20), wherein the device body (40) comprises a first connecting flange (41) and a second connecting flange (42), wherein the first command valve element (10) and the second command valve element (20) are mounted between the first connecting flange (41) and the second connecting flange (42) .

9. A fluidic command device (1) according to claim 8, wherein the first connecting flange (41) comprises the four inlet ports (I1, I2, I3, I4) and the four outlet ports (O1, O2, O3, O4).

10. A fluidic command device (1) according to claim 9, wherein the first connecting flange (41) further comprises the first auxiliary port (310) connectable to the first end of the auxiliary duct (31) and the second auxiliary port (320) connectable to the second end of the auxiliary duct (32).

11. A thermal management assembly (500) of a thermal regulation system (600) of a vehicle (900), wherein said vehicle (900) comprises a first operating group (910), a second operating group (920), a third operating group (930) and a fourth operating group (940);
wherein the thermal management assembly (500) comprises:
- a fluidic command device (1) according to any one of the preceding claims;
- a first pump group (510) suitable to command the movement of the working fluid in the thermal management assembly (500) comprising a first inlet duct (511) and a first outlet duct (512), comprising:
i) a first command unit (513) comprising a first impeller, which intercepts working fluid flowing in the first inlet duct (511) and sends it to the first outlet duct (512);
ii) a first stabilization tank (514) which divides the first inlet duct (511) into a first duct upstream section (511') and a first duct downstream section (511");
- a second pump group (520) suitable, in turn, for commanding the movement of the working fluid in the thermal management assembly (500) comprising a second inlet duct (521) and a second outlet duct (522), comprising:
l) a second command unit (523) comprising a second impeller, which intercepts the working fluid flowing in the second inlet duct (521) to send it into the second outlet duct (522);
m) a second stabilization tank (524) which divides the second inlet duct (521) into a second duct upstream section (521') and a second duct downstream section (521").

12. A thermal management assembly (500) according to claim 11, wherein the auxiliary duct (30) fluidically connects the first outlet duct (512) with the second inlet duct (521), preferably upstream of the possible second stabilization tank (524).

13. A thermal regulation system (600) of a vehicle (900), wherein said vehicle (900) comprises a first operating group (910), a second operating group (920), a third operating group (930) and a fourth operating group (940), wherein said thermal regulation system (600) comprises:
- a plurality of system ducts (601, 602, 603, 604, 611, 612, 613, 614) fluidically connected to a first operating group (910), a second operating group (920), a third operating group (930) and a fourth operating group (940); and
- a thermal management assembly (500) fluidically connected with said system ducts (601, 602, 603, 604, 611, 612, 613, 614) according to any one of claims 11 or 12.

14. A vehicle (900) comprising a first operating group (910), e.g. an endothermic engine group, a second operating group (920), e.g. a first battery group and a second battery group, a third operating group (930), e.g. comprising the first battery group and a first electric motor group, a fourth operating group (940), e.g. comprising the second battery group and a second electric motor group, and a thermal regulation system (600) according to claim 13.

15. A hybrid-powered vehicle (900) according to claim 14, comprising the first operating group (910) comprising an endothermic engine group, the second operating group (920) comprising a first battery group and a second battery group, the third operating group (930) comprising the first battery group and a first electric motor group, the fourth operating group (940) comprising the second battery group and a second electric motor group.

## Patentansprüche

1. Fluidische Steuervorrichtung (1) einer Wärmeverwaltungsanordnung (500) eines Wärmeregulierungssystems (600) eines Fahrzeugs (900), wobei das Fahrzeug (900) vier Betriebsgruppen (910, 920, 930, 940) aufweist, wobei die Wärmeverwaltungsanordnung (500) aufweist:
i) eine erste Pumpengruppe (510), die geeignet ist, um die Bewegung des Arbeitsfluids in der Wärmeverwaltungsanordnung (500) zu steuern, die einen ersten Einlasskanal (511) und einen ersten Auslasskanal (512) aufweist;
ii) eine zweite Pumpengruppe (520), die wiederrum geeignet ist, die Bewegung des Arbeitsfluids in der Wärmeverwaltungsanordnung (500) zu steuern, die einen zweiten Einlasskanal (521) und einen zweiten Auslasskanal (522) aufweist;
wobei die fluidische Steuervorrichtung (1) **dadurch gekennzeichnet, dass** sie ein erstes Paar Anschlüsse (5110, 5210) und ein zweites Paar Anschlüsse (510, 520) aufweist, das mit dem ersten Paar Kanäle (511, 512) und mit dem zweiten Paar Kanäle (521, 522) fluidisch verbindbar ist und aufweist:
- vier Einlassanschlüsse (I1, I2, I3, I4), die jeweils mit einer jeweiligen Betriebsgruppe (910, 920, 930, 940) fluidisch verbindbar sind, um es dem Arbeitsfluid zu ermöglichen, in die fluidische Steuervorrichtung (1) einzutreten;
- vier Auslassanschlüsse (O1, O2, O3, O4), die jeweils mit einer jeweiligen Betriebsgruppe (910, 920, 930, 940) fluidisch verbindbar sind, um es dem Arbeitsfluid zu ermöglichen, aus der fluidischen Steuervorrichtung (1) auszutreten;
- einen Nebenkanal (30), der die erste Pumpengruppe (510) und die zweite Pumpengruppe (520) fluidisch verbindet;
wobei die fluidische Steuervorrichtung (1) konfigurierbar ist in:
l) einer ersten Arbeitskonfiguration, in der das Arbeitsfluid in den ersten Einlassanschluss (I1) einströmt und aus dem ersten Auslassanschluss (01) ausströmt und somit die Strömung durch den anderen Einlass- und den anderen Auslassanschluss verhindert wird, wobei zwischen dem ersten Einlassanschluss (I1) und dem ersten Auslassanschluss (01) das Arbeitsfluid in die erste Pumpengruppe (510), den Nebenkanal (30) und die zweite Pumpengruppe (520) einströmt;
m) einer zweiten Arbeitskonfiguration, in der das Arbeitsfluid in den zweiten Einlassanschluss (I2) einströmt und aus dem zweiten Auslassanschluss (O2) ausströmt und somit die Strömung durch die anderen Einlassanschlüsse und die anderen Auslassanschlüsse verhindert wird, wobei zwischen dem zweiten Einlassanschluss (I2) und dem zweiten Auslassanschluss (O2) das Arbeitsfluid sowohl in die erste Pumpengruppe (510) als auch in die zweite Pumpengruppe (520) einströmt, wodurch die Strömung in den Nebenkanal (30) verhindert wird;
n) einer dritten Arbeitskonfiguration, in der das Arbeitsfluid in den dritten Einlassanschluss (I3) einströmt und aus dem dritten Auslassanschluss (O3) ausströmt, wobei zwischen dem dritten Einlassanschluss (I3) und dem dritten Auslassanschluss (O3) das Arbeitsfluid in die erste Pumpengruppe (510) einströmt und wobei das Arbeitsfluid in den vierten Einlassanschluss (I4) einströmt und aus dem vierten Auslassanschluss (O4) ausströmt, wobei zwischen dem vierten Einlassanschluss (I4) und dem vierten Auslassanschluss (O4) das Arbeitsfluid in die zweite Pumpengruppe (520) einströmt.

2. Fluidische Steuervorrichtung (1) nach Anspruch 1, wobei die fluidische Steuervorrichtung (1) aufweist:
- ein erstes Steuerventilelement (10), das auf einer Seite mit den vier Einlassanschlüssen (I1, I2, I3, I4) und mit einem ersten Ende des Nebenkanals (31) und auf der anderen Seite mit dem ersten Einlasskanal (511) und mit dem zweiten Einlasskanal (521) fluidisch verbunden ist;
- ein zweites Steuerventilelement (20), das auf einer Seite mit dem ersten Auslasskanal (512) und mit dem zweiten Auslasskanal (522) und auf der anderen Seite mit einem zweiten Ende des Nebenkanals (32) und mit den vier Auslassanschlüssen (O1, O2, O3, O4) fluidisch verbunden ist.

3. Fluidische Steuervorrichtung (1) nach Anspruch 2, wobei sowohl das erste Steuerventilelement (10) als auch das zweite Steuerventilelement (20) eine Vielzahl von Steuerabschnitten darin aufweisen, deren Positionierung derart ist, dass sie die Strömung des Arbeitsfluids von einer Seite zur anderen des jeweiligen Steuerventilelements lenkt.

4. Fluidische Steuervorrichtung (1) nach Anspruch 2 oder Anspruch 3, wobei sich das erste Steuerventilelement (10) entlang einer ersten Achse (X1-X1) erstreckt und sich das zweite Steuerventilelement (20) entlang einer zweiten Achse (X2-X2) erstreckt, wobei die unterschiedlichen Arbeitskonfigurationen unterschiedlichen Winkelpositionen des ersten Steuerventilelements (10) in Bezug auf die erste Achse (X1-X1) und des zweiten Steuerventilelements (20) in Bezug auf die zweite Achse (X2-X2)entsprechen.

5. Fluidische Steuervorrichtung (1) nach Anspruch 4, wobei die fluidische Steuervorrichtung (1) Steuermittel (50) aufweist, die mit dem ersten Steuerventilelement (10) und mit dem zweiten Steuerventilelement (20) betriebswirksam verbunden sind und dazu geeignet sind, um sie in einer bevorzugten Winkelposition zu steuern.

6. Fluidische Steuervorrichtung (1) nach Anspruch 5, wobei die Steuermittel (50) ein aktives Glied (51), ein erstes passives Glied (52'), das mit dem aktiven Glied (51) und dem ersten Steuerventilelement (10) in Eingriff steht, sowie ein zweites passives Glied (52"), das mit dem aktiven Glied (51) und mit dem zweiten Steuerventilelement (20) in Eingriff steht, aufweisen, sodass die Wirkung des aktiven Glieds (51) einer Drehung des ersten passives Glieds (52') und somit des ersten Steuerventilelements (10) sowie einer Drehung des zweiten passiven Glieds (52") und somit des zweiten Steuerventilelements (20) entspricht.

7. Fluidische Steuervorrichtung (1) nach Anspruch 6, wobei das aktive Glied (51) ein Zahnrad aufweist und das erste passive Glied (52') und das zweite passive Glied (52") jeweils weitere Zahnräder aufweisen, die mit dem aktiven Glied (51), das sich jeweils um die erste Achse (X1-X1) und die zweite Achse (X2-X2) erstreckt, kämmen.

8. Fluidische Steuervorrichtung (1) nach einem der vorstehenden Ansprüche in Kombination mit Anspruch 3, wobei die fluidische Steuervorrichtung (1) einen Vorrichtungskörper (40) aufweist, der geeignet ist, um das erste Steuerventilelement (10) und das zweite Steuerventilelement (20) aufzunehmen, wobei der Vorrichtungskörper (40) einen ersten Verbindungsflansch (41) und einen zweiten Verbindungsflansch (42) aufweist, wobei das erste Steuerventilelement (10) und das zweite Steuerventilelement (20) zwischen dem ersten Verbindungsflansch (41) und dem zweiten Verbindungsflansch (42) montiert sind.

9. Fluidische Steuervorrichtung (1) nach Anspruch 8, wobei der erste Verbindungsflansch (41) die vier Einlassanschlüsse (I1, I2, I3, I4) und die vier Auslassanschlüsse (O1, O2, O3, O4) aufweist.

10. Fluidische Steuervorrichtung (1) nach Anspruch 9, wobei der erste Verbindungsflansch (41) ferner den ersten Nebenanschluss (310), der mit dem ersten Ende des Nebenkanals (31) verbindbar ist, und den zweiten Nebenanschluss (320), der mit dem zweiten Ende des Nebenkanals (32) verbindbar ist, aufweist.

11. Wärmeverwaltungsanordnung (500) eines Wärmeregulierungssystems (600) eines Fahrzeugs (900), wobei das Fahrzeug (900) eine erste Betriebsgruppe (910), eine zweite Betriebsgruppe (920), eine dritte Betriebsgruppe (930) und eine vierte Betriebsgruppe (940) aufweist;
wobei die Wärmeverwaltungsanordnung (500) aufweist:
- ein fluidische Steuervorrichtung (1) nach einem der vorstehenden Ansprüche;
- eine erste Pumpengruppe (510), die geeignet ist, um die Bewegung des Arbeitsfluids in der Wärmeverwaltungsanordnung (500) zu steuern, die einen ersten Einlasskanal (511) und einen ersten Auslasskanal (512) aufweist, aufweisend:
i) eine erste Steuereinheit (513), aufweisend ein erstes Flügelrad, das im ersten Einlasskanal (511) strömendes Arbeitsfluid abfängt und zum ersten Auslasskanal (512) leitet;
ii) einen ersten Stabilisierungstank (514), der den ersten Einlasskanal (511) in einen ersten Stromaufwärts-Kanalabschnitt (511') und einen ersten Stromabwärts-Kanalabschnitt (511") unterteilt;
- eine zweite Pumpengruppe (520), die wiederum geeignet ist, um die Bewegung des Arbeitsfluids in der Wärmeverwaltungsanordnung (500) zu steuern, die einen zweiten Einlasskanal (521) und einen zweiten Auslasskanal (522) aufweist, aufweisend:
l) eine zweite Steuereinheit (523), die ein zweites Flügelrad aufweist, welches das in den zweiten Einlasskanal (521) strömende Arbeitsfluid abfängt, um es in den zweiten Auslasskanal (522) zu leiten;
m) einen zweiten Stabilisierungstank (524), der den zweiten Einlasskanal (521) in einen zweiten Stromaufwärts-Kanalabschnitt (521') und einen zweiten Stromabwärts-Kanalabschnitt (521") unterteilt.

12. Wärmeverwaltungsanordnung (500) nach Anspruch 11, wobei der Nebenkanal (30) den ersten Auslasskanal (512) fluidisch mit dem zweiten Einlasskanal (521) verbindet, vorzugsweise stromaufwärts des möglichen zweiten Stabilisierungstanks (524).

13. Wärmeregulierungssystem (600) für ein Fahrzeug (900), wobei das Fahrzeug (900) eine erste Betriebsgruppe (910), eine zweite Betriebsgruppe (920), eine dritte Betriebsgruppe (930) und eine vierte Betriebsgruppe (940) aufweist, wobei das Wärmeregulierungssystem (600) aufweist:
- eine Vielzahl von Systemkanälen (601, 602, 603, 604, 611, 612, 613, 614), die mit einer ersten Betriebsgruppe (910), einer zweiten Betriebsgruppe (920), einer dritten Betriebsgruppe (930) und einer vierten Betriebsgruppe (940) fluidisch verbunden sind; und
- eine Wärmeverwaltungsanordnung (500), die mit den Systemkanälen (601, 602, 603, 604, 611, 612, 613, 614) nach einem der Ansprüche 11 oder 12 fluidisch verbunden ist.

14. Fahrzeug (900), aufweisend eine erste Betriebsgruppe (910), z.B. eine endotherme Motorgruppe, eine zweite Betriebsgruppe (920), z.B. eine erste Batteriegruppe und eine zweite Batteriegruppe, eine dritte Betriebsgruppe (930), z.B. aufweisend die erste Batteriegruppe und eine erste Elektromotorgruppe, eine vierte Betriebsgruppe (940), z.B. aufweisend die zweite Batteriegruppe und eine zweite Elektromotorgruppe, sowie ein Wärmeregulierungssystem (600) nach Anspruch 13.

15. Hybrid angetriebenes Fahrzeug (900) nach Anspruch 14, aufweisend die erste Betriebsgruppe (910), die eine endotherme Motorgruppe aufweist, die zweite Betriebsgruppe (920), die eine erste Batteriegruppe und eine zweite Batteriegruppe aufweist, und die dritte Betriebsgruppe (930), welche die erste Batteriegruppe und eine erste Elektromotorgruppe aufweist, wobei die vierte Betriebsgruppe (940) die zweite Batteriegruppe und eine zweite Elektromotorgruppe aufweist.

## Revendications

1. Dispositif de commande fluidique (1) d'un ensemble de gestion thermique (500) d'un système de régulation thermique (600) d'un véhicule (900), dans lequel ledit véhicule (900) comprend quatre groupes fonctionnels (910, 920, 930, 940), dans lequel l'ensemble de gestion thermique (500) comprend :
i) un premier groupe pompe (510) approprié pour commander le déplacement du fluide de travail dans l'ensemble de gestion thermique (500) comprenant un premier conduit (511) d'admission et un premier conduit (512) d'évacuation ;
ii) un deuxième groupe pompe (520) approprié, à son tour, pour commander le déplacement du fluide de travail dans l'ensemble de gestion thermique (500), comprenant un deuxième conduit (521) d'admission et un deuxième conduit (522) d'évacuation ;
dans lequel le dispositif de commande fluidique (1) est **caractérisé en ce qu'**il comprend une première paire d'orifices (5110, 5210) et une deuxième paire d'orifices (5120, 5220) pouvant être reliés de manière fluidique à la première paire de conduits (511, 512) et à la deuxième paire de conduits (521, 522) et comporte :
- quatre orifices d'admission (11, 12, 13, 14), chacun pouvant être relié de manière fluidique à un groupe fonctionnel (910, 920, 930, 940) respectif pour permettre au fluide de travail d'entrer dans le dispositif de commande fluidique (1) ;
- quatre orifices d'évacuation (O1, O2, O3, O4), chacun pouvant être relié de manière fluidique à un groupe fonctionnel (910, 920, 930, 940) respectif pour permettre au fluide de travail de sortir du dispositif de commande fluidique (1) ;
- un conduit auxiliaire (30), qui relie de manière fluidique le premier groupe pompe (510) et le deuxième groupe pompe (520) ;
dans lequel le dispositif de commande fluidique (1) est configurable dans :
l) une première configuration de travail, dans laquelle le fluide de travail s'écoule dans le premier orifice d'admission (11) et s'écoule hors du premier orifice d'évacuation (O1), empêchant ainsi l'écoulement à travers les autres orifices d'admission et d'évacuation, dans lequel entre le premier orifice d'admission (11) et le premier orifice d'évacuation (O1), le fluide de travail s'écoule dans le premier groupe pompe (510), le conduit auxiliaire (30) et le deuxième groupe pompe (520) ;
m) une deuxième configuration de travail, dans laquelle le fluide de travail s'écoule dans le deuxième orifice d'admission (12) et s'écoule hors du deuxième orifice d'évacuation (O2), empêchant ainsi l'écoulement à travers les autres orifices d'admission et des autres orifices d'évacuation, dans lequel entre le deuxième orifice d'admission (12) et le deuxième orifice d'évacuation (O2), le fluide de travail s'écoule à la fois dans le premier groupe pompe (510) et le deuxième groupe pompe (520), empêchant l'écoulement dans le conduit auxiliaire (30) ;
n) une troisième configuration de travail, dans laquelle le fluide de travail s'écoule dans le troisième orifice d'admission (13) et s'écoule hors du troisième orifice d'évacuation (O3), dans lequel entre le troisième orifice d'admission (13) et le troisième orifice d'évacuation (O3), le fluide de travail s'écoule dans le premier groupe pompe (510) et dans lequel le fluide de travail s'écoule dans le quatrième orifice d'admission (14) et s'écoule hors du quatrième orifice d'évacuation (O4), dans lequel entre le quatrième orifice d'admission (14) et le quatrième orifice d'évacuation (O4), le fluide de travail s'écoule dans le deuxième groupe pompe (520).

2. Dispositif de commande fluidique (1) selon la revendication 1, dans lequel le dispositif de commande fluidique (1) comprend :
- un premier élément vanne de commande (10) relié de manière fluidique sur un côté aux quatre orifices d'admission (I1, 12, 13, 14) et à une première extrémité du conduit auxiliaire (31) et sur l'autre côté au premier conduit (511) d'admission et au deuxième conduit (521) d'admission ;
- un deuxième élément vanne de commande (20) relié de manière fluidique sur un côté au premier conduit (512) d'évacuation et au deuxième conduit (522) d'évacuation et sur l'autre côté à une deuxième extrémité du conduit auxiliaire (32) et aux quatre orifices d'évacuation (O1, O2, O3, O4).

3. Dispositif de commande fluidique (1) selon la revendication 2, dans lequel le premier élément vanne de commande (10) et le deuxième élément vanne de commande (20) comprennent tous deux une pluralité de sections de commande dans ceux-ci, dont le positionnement est tel qu'il dirige l'écoulement du fluide de travail d'un côté à l'autre de l'élément vanne de commande respectif.

4. Dispositif de commande fluidique (1) selon la revendication 2 ou la revendication 3, dans lequel le premier élément vanne de commande (10) s'étend le long d'un premier axe (X1-X1) et le deuxième élément vanne de commande (20) s'étend le long d'un deuxième axe (X2-X2), dans lequel les différentes configurations de travail correspondent à différentes positions angulaires du premier élément vanne de commande (10) par rapport au premier axe (X1-X1) et du deuxième élément vanne de commande (20) par rapport au deuxième axe (X2-X2).

5. Dispositif de commande fluidique (1) selon la revendication 4, dans lequel le dispositif de commande fluidique (1) comprend des moyens de commande (50) reliés fonctionnellement au premier élément vanne de commande (10) et au deuxième élément vanne de commande (20) appropriés pour les commander dans une position angulaire préférée.

6. Dispositif de commande fluidique (1) selon la revendication 5, dans lequel lesdits moyens de commande (50) comprennent un organe actif (51), un premier organe passif (52') en prise avec l'organe actif (51) et avec le premier élément vanne de commande (10), et un deuxième organe passif (52") en prise avec l'organe actif (51) et avec le deuxième élément vanne de commande (20), de sorte que l'action de l'organe actif (51) corresponde à une rotation du premier organe passif (52') et par conséquent du premier élément vanne de commande (10), et à une rotation du deuxième organe passif (52") et par conséquent du deuxième élément vanne de commande (20).

7. Dispositif de commande fluidique (1) selon la revendication 6, dans lequel l'organe actif (51) comprend une roue dentée, et le premier organe passif (52') et le deuxième organe passif (52") comprennent des roues dentées supplémentaires, respectivement, s'engrenant avec l'organe actif (51), s'étendant autour du premier axe (X1-X1) et du deuxième axe (X2-X2), respectivement.

8. Dispositif de commande fluidique (1) selon l'une quelconque des revendications précédentes en association avec la revendication 3, dans lequel le dispositif de commande fluidique (1) comprend un corps de dispositif (40) approprié pour contenir le premier élément vanne de commande (10) et le deuxième élément vanne de commande (20), dans lequel le corps de dispositif (40) comprend un premier flasque de liaison (41) et un deuxième flasque de liaison (42), dans lequel le premier élément vanne de commande (10) et le deuxième élément vanne de commande (20) sont montés entre le premier flasque de liaison (41) et le deuxième flasque de liaison (42).

9. Dispositif de commande fluidique (1) selon la revendication 8, dans lequel le premier flasque de liaison (41) comprend les quatre orifices d'admission (I1, 12, 13, 14) et les quatre orifices d'évacuation (O1, O2, O3, O4).

10. Dispositif de commande fluidique (1) selon la revendication 9, dans lequel le premier flasque de liaison (41) comprend en outre le premier orifice auxiliaire (310) pouvant être relié à la première extrémité du conduit auxiliaire (31) et le deuxième orifice auxiliaire (320) pouvant être relié à la deuxième extrémité du conduit auxiliaire (32).

11. Ensemble de gestion thermique (500) d'un système de régulation thermique (600) d'un véhicule (900), dans lequel ledit véhicule (900) comprend un premier groupe fonctionnel (910), un deuxième groupe fonctionnel (920), un troisième groupe fonctionnel (930) et un quatrième groupe fonctionnel (940) ;
dans lequel l'ensemble de gestion thermique (500) comprend :
- un dispositif de commande fluidique (1) selon l'une quelconque des revendications précédentes ;
- un premier groupe pompe (510) approprié pour commander le déplacement du fluide de travail dans l'ensemble de gestion thermique (500) comprenant un premier conduit (511) d'admission et un premier conduit (512) d'évacuation, comprenant :
i) une première unité de commande (513) comprenant une première roue, qui intercepte un fluide de travail s'écoulant dans le premier conduit (511) d'admission et l'envoie au premier conduit (512) d'évacuation ;
ii) une première cuve de stabilisation (514) qui divise le premier conduit (511) d'admission en une première section amont de conduit (511') et une première section aval de conduit (511") ;
- un deuxième groupe pompe (520) approprié, à son tour, pour commander le déplacement du fluide de travail dans l'ensemble de gestion thermique (500) comprenant un deuxième conduit (521) d'admission et un deuxième conduit (522) d'évacuation, comprenant :
l) une deuxième unité de commande (523) comprenant une deuxième roue, qui intercepte le fluide de travail s'écoulant dans le deuxième conduit (521) d'admission pour l'envoyer dans le deuxième conduit (522) d'évacuation ;
m) une deuxième cuve de stabilisation (524) qui divise le deuxième conduit (521) d'admission en une deuxième section amont de conduit (521') et une deuxième section aval de conduit (521").

12. Ensemble de gestion thermique (500) selon la revendication 11, dans lequel le conduit auxiliaire (30) relie de manière fluidique le premier conduit (512) d'évacuation au deuxième conduit (521) d'admission, de préférence en amont de la deuxième cuve de stabilisation (524) possible.

13. Système de régulation thermique (600) d'un véhicule (900), dans lequel ledit véhicule (900) comprend un premier groupe fonctionnel (910), un deuxième groupe fonctionnel (920), un troisième groupe fonctionnel (930) et un quatrième groupe fonctionnel (940), dans lequel ledit système de régulation thermique (600) comprend :
- une pluralité de conduits de système (601, 602, 603, 604, 611, 612, 613, 614) reliés de manière fluidique à un premier groupe fonctionnel (910), un deuxième groupe fonctionnel (920), un troisième groupe fonctionnel (930) et un quatrième groupe fonctionnel (940) ; et
- un ensemble de gestion thermique (500) relié de manière fluidique auxdits conduits de système (601, 602, 603, 604, 611, 612, 613, 614) selon l'une quelconque des revendications 11 ou 12.

14. Véhicule (900) comprenant un premier groupe fonctionnel (910), par exemple un groupe moteur endothermique, un deuxième groupe fonctionnel (920), par exemple un premier groupe batterie et un deuxième groupe batterie, un troisième groupe fonctionnel (930), par exemple comprenant le premier groupe batterie et un premier groupe moteur électrique, un quatrième groupe fonctionnel (940), par exemple comprenant le deuxième groupe batterie et un deuxième groupe moteur électrique, et un système de régulation thermique (600) selon la revendication 13.

15. Véhicule (900) à alimentation hybride selon la revendication 14, comprenant le premier groupe fonctionnel (910) comprenant un groupe moteur endothermique, le deuxième groupe fonctionnel (920) comprenant un premier groupe batterie et un deuxième groupe batterie, le troisième groupe fonctionnel (930) comprenant le premier groupe batterie et un premier groupe moteur électrique, le quatrième groupe fonctionnel (940) comprenant le deuxième groupe batterie et un deuxième groupe moteur électrique.
